(19) Europäisches Patentamt
European Patent Office
Office européen des brevets

(11) EP 2 693 455 A1

(12) EUROPEAN PATENT APPLICATION
published in accordance with Art. 153(4) EPC

(43) Date of publication:
**05.02.2014 Bulletin 2014/06**

(21) Application number: **12763500.1**

(22) Date of filing: **29.03.2012**

(51) Int Cl.:
***H01G 9/038*** (0000.00) ***C07C 31/38*** (2006.01)
***C07C 43/17*** (2006.01)

(86) International application number:
**PCT/JP2012/058474**

(87) International publication number:
**WO 2012/133701 (04.10.2012 Gazette 2012/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2011 JP 2011080299**

(71) Applicant: **Daikin Industries, Ltd.**
**Osaka-shi, Osaka 530-8323 (JP)**

(72) Inventors:
- **TAKAHASHI, Kenzou**
  **Osaka 530-8323 (JP)**
- **KOH, Meiten**
  **Osaka 530-8323 (JP)**
- **SAKATA, Hideo**
  **Osaka 530-8323 (JP)**
- **YAMAMOTO, Emi**
  **Osaka 530-8323 (JP)**

(74) Representative: **HOFFMANN EITLE**
**Patent- und Rechtsanwälte**
**Arabellastrasse 4**
**81925 München (DE)**

# (54) ELECTRIC DOUBLE-LAYER CAPACITOR AND NON-AQUEOUS ELECTROLYTE FOR ELECTRIC DOUBLE-LAYER CAPACITOR

(57) Provided is an electric double-layer capacitor excellent in long-term reliability, particularly in suppressing its expansion, and a non-aqueous electrolytic solution for the electric double-layer capacitor. The present invention relates to an electric double-layer capacitor, comprising: a positive electrode; a negative electrode; and a non-aqueous electrolytic solution that includes a non-aqueous solvent and an electrolyte salt, the non-aqueous solvent including: a fluorine-containing ether; a fluorine-containing unsaturated compound (I); and a hydroxyl group-containing compound (II), the fluorine-containing ether being represented by the formula (1):

$$Rf^1\text{-O-}Rf^2 \qquad (1)$$

wherein $Rf^1$ and $Rf^2$ are the same as or different from each other, and are each a C1-C10 alkyl group or a C1-C10 fluoro-alkyl group, provided that at least one of $Rf^1$ and $Rf^2$ is a fluoro-alkyl group, the hydroxyl group-containing compound (II) being represented by the formula (2):

$$Rf^1OH \qquad (2)$$

wherein $Rf^1$ is as defined above, the total amount of the compounds (I) and (II) being 5,000 ppm or less based on the amount of the fluorine-containing ether.

EP 2 693 455 A1

## Description

### TECHNICAL FIELD

The present invention relates to an electric double-layer capacitor provided with a non-aqueous electrolytic solution including an electrolyte salt and a non-aqueous solvent that contains a reduced amount of a specific compound. Further, the present invention relates to a non-aqueous electrolytic solution used for an electric double-layer capacitor.

### BACKGROUND ART

Solvents for dissolving an electrolyte salt used in an electric double-layer capacitor including at least one polarizable electrode as a positive electrode and/or a negative electrode should be stable when used at a withstand voltage of 3 V or higher. To that end, use in combination of ethylene carbonate and propylene carbonate, which is a cyclic carbonate with a high oxidation potential (a high withstand voltage), has been proposed (see, e.g., Patent Literature 1). However, the upper limit of the voltage resistance remains about 2.7 V.

Further, in order to improve a withstand voltage, use of a non-aqueous solvent that contains sulfolane or its derivatives and a specific chain carbonic acid ester (chain carbonate) has been proposed (see, e.g., Patent Literature 2). In order to improve safety, use of an electrolytic solution that includes a specific electrolyte and a fluorine-containing organic solvent in combination has been proposed (see, e.g., Patent Literature 3).

Such conventional techniques, however, cannot always provide a good balance of high withstand voltage and long lifetime which are characteristics required for electric double-layer capacitors. In particular, use of the electrolytic solution disclosed in Patent Literature 2 increases internal resistance of a capacitor, and therefore such a capacitor has room for improvement in long-term reliability.

A method using a fluorine-containing ether such as $HCF_2CF_2CH_2OCF_2CF_2H$ as an electrolytic solution has been proposed for providing a non-aqueous electrolytic solution battery with high withstand voltage and improved safety (see, e.g., Patent Literature 4). However, the electric double-layer capacitor using the electrolytic solution disclosed in Patent Literature 4 is sometimes unsatisfactory in terms of long-term reliability, particularly, suppression of the expansion of the capacitor.

As described above, conventional techniques relating to an electric double-layer capacitor using an electrolytic solution for an electric double-layer capacitor have not been sufficiently examined in regard to long-term reliability, particularly, suppression of the expansion of the capacitor.

### CITATION LIST

#### - Patent Literature

Patent Literature 1: JP-A 2000-208372
Patent Literature 2: JP-A H08-306591
Patent Literature 3: JP-A 2001-143750
Patent Literature 4: JP-B 3807459

### SUMMARY OF INVENTION

#### - Technical Problem

An object of the present invention is to provide an electric double-layer capacitor excellent in long-term reliability, particularly in suppressing its expansion, and a non-aqueous electrolytic solution for the electric double-layer capacitor.

#### - Solution to Problem

The present inventors made various investigations to solve the above problem, and found that use of a non-aqueous solvent that contains a reduced amount of a specific compound solves the problem. Thereby, the present invention has been completed.

That is, the present invention relates to an electric double-layer capacitor, comprising:

a positive electrode;

a negative electrode; and
a non-aqueous electrolytic solution that includes a non-aqueous solvent and an electrolyte salt,
the non-aqueous solvent including:
a fluorine-containing ether;
a fluorine-containing unsaturated compound (I); and
a hydroxyl group-containing compound (II),
the fluorine-containing ether being represented by the formula (1):

$$Rf^1\text{-O-}Rf^2 \qquad (1)$$

wherein $Rf^1$ and $Rf^2$ are the same as or different from each other, and are each a C1-C10 alkyl group or a C1-C10 fluoro-alkyl group, provided that at least one of $Rf^1$ and $Rf^2$ is a fluoro-alkyl group,

the hydroxyl group-containing compound (II) being represented by the formula (2):

$$Rf^1OH \qquad (2)$$

wherein $Rf^1$ is as defined above,
the total amount of the compounds (I) and (II) being 5,000 ppm or less based on the amount of the fluorine-containing ether.

The fluorine-containing ether represented by the formula (1) is preferably $HCF_2CF_2CH_2OCF_2CF_2H$, the fluorine-containing unsaturated compound (I) preferably includes $CF_2=CFCH_{20}CF_2CF_2H$ (I-1) and $HCF_2CF=CHOCF_2CF_2H$ (I-2), and the hydroxyl group-containing compound (II) is preferably $HCF_2CF_2CH_2OH$ (II-1).

The fluorine-containing ether represented by the formula (1) is preferably $HCF_2CF_2CH_2OCF_2CFHCF_3$, the fluorine-containing unsaturated compound (I) preferably includes $CF_2=CFCH_2OCF_2CFHCF_3$ (I-3), $HCF_2CF_2CH_2OCF=CFCF_3$ (1-4), $HCF_2CF_2CH_2OCF_2CF=CF_2$ (1-5), and $HCF_2CF=CHOCF_2CFHCF_3$ (I-6), and the hydroxyl group-containing compound (II) is preferably $HCF_2CF_2CH_2OH$ (II-1).

The non-aqueous solvent preferably contains the fluorine-containing ether represented by the formula (1) in an amount of 0.01 to 90% by weight.

The present invention further relates to a non-aqueous electrolytic solution for an electric double-layer capacitor, comprising:

a non-aqueous solvent; and
an electrolyte salt,
the non-aqueous solvent including:
a fluorine-containing ether;
a fluorine-containing unsaturated compound (I); and
a hydroxyl group-containing compound (II), the fluorine-containing ether being represented by the formula (1):

$$Rf^1\text{-O-}Rf^2 \qquad (1)$$

wherein $Rf^1$ and $Rf^2$ are the same as or different from each other, and are each a C1-C10 alkyl group or a C1-C10 fluoro-alkyl group, provided that at least one of $Rf^1$ and $Rf^2$ is a fluoro-alkyl group,
the hydroxyl group-containing compound (II) being represented by the formula (2):

$$Rf^1OH \qquad (2)$$

wherein $Rf^1$ is as defined above,
the total amount of the compounds (I) and (II) being 5,000 ppm or less based on the amount of the fluorine-containing ether.

In the non-aqueous electrolytic solution, a moisture content is preferably 20 ppm or less.

- Advantageous Effects of Invention

The present invention provides an electric double-layer capacitor excellent in long-term reliability, particularly in suppressing its expansion, and a non-aqueous electrolytic solution for the electric double-layer capacitor.

DESCRIPTION OF EMBODIMENTS

The electric double-layer capacitor comprises a positive electrode;
a negative electrode; and
a non-aqueous electrolytic solution that includes a non-aqueous solvent and an electrolyte salt, the non-aqueous solvent including:

a fluorine-containing ether;
a fluorine-containing unsaturated compound (I) (hereinafter, also referred to as a compound (I)); and
a hydroxyl group-containing compound (II) (hereinafter, also referred to as a compound (II)), the fluorine-containing ether being represented by the formula (1):

$$Rf^1\text{-O-}Rf^2 \qquad (1)$$

wherein $Rf^1$ and $Rf^2$ are the same as or different from each other, and are each a C1-C10 alkyl group or a C1-C10 fluoro-alkyl group, provided that at least one of $Rf^1$ and $Rf^2$ is a fluoro-alkyl group,
the hydroxyl group-containing compound (II) being represented by the formula (2):

$$Rf^1OH \qquad (2)$$

wherein $Rf^1$ is as defined above, the total amount of the compounds (I) and (II) being 5,000 ppm or less based on the amount of the fluorine-containing ether.

Specific examples of the fluorine-containing ether represented by the formula (1) include $HCF_2CF_2CH_2OCF_2CF_2H$, $CF_3CF_2CH_2OCF_2CF_2H$, $HCF_2CF_2CH_2OCF_2CFHCF_3$, $CF_3CF_2CH_2OCF_2CFHCF_3$, $C_6F_{13}OCH_3$, $C_6F_{13}OC_2H_5$, $C_8F_{17}OCH_3$, $C_8F_{17}OC_2H_5$, $CF_3CFHCF_2CH(CH_3)OCF_2CFHCF_3$, $HCF_2CF_2OCH(C_2H_5)_2$, $HCF_2CF_2OC_4H_9$, $HCF_2CF_2OCH_2CH(C_2H_5)_2$, and $HCF_2CF_2OCH_2CH(CH_3)_2$. Preferred among these are at least one compound selected from the group consisting of $HCF_2CF_2CH_2OCF_2CF_2H$ and $HCF_2CF_2CH_2OCF_2CFHCF_3$, and $HCF_2CF_2CH_2OCF_2CF_2H$ is more preferred, in terms of long-term reliability.

The fluorine content of the fluorine-containing ether used in the present invention is preferably 50% by weight or more for providing good oxidation resistance and safety. The fluorine content is particularly preferably 55 to 66% by weight. The fluorine content is calculated from a structural formula.

The non-aqueous solvent preferably contains the fluorine-containing ether represented by the formula (1) in an amount of 0.01 to 90% by weight. If the amount of the fluorine-containing ether is less than 0.01% by weight, the safety tends to be hardly improved and the withstand voltage tends to be hardly increased, and if the amount thereof is more than 90% by weight, the electrolytic solution tends to separate into two layers or becomes highly viscous to have poor load characteristics at low temperatures. The lower limit of the amount is more preferably 0.1% by weight, and still more preferably 0.5% by weight. The upper limit of the amount is more preferably 60% by weight, and still more preferably 50% by weight.

The fluorine-containing unsaturated compound (I) is derived from a by-product of the synthesis of the fluorine-containing ether represented by the formula (1). Specifically, the compound (I) is one having an unsaturated bond formed by elimination of hydrogen fluoride (HF) from the fluorine-containing ether represented by the formula (1). Specific examples of the fluorine-containing unsaturated compound (I) include $CF_2{=}CFCH_2OCF_2CF_2H$ (I-1), $HCF_2CF{=}CHOCF_2CF_2H$ (1-2), $CF_2{=}CFCH_2OCF_2CFHCF_3$ (1-3), $HCF_2CF_2CH_2OCF{=}CFCF_3$ (I-4), $HCF_2CF_2CH_2OCF_2CF{=}CF_2$ (I-5), and $HCF_2CF{=}CHOCF_2CFHCF_3$ (I-6).

The hydroxyl group-containing compound (II) is derived from a material for the synthesis of the fluorine-containing ether represented by the formula (1), and may be a compound represented by the formula (2):

$$Rf^1OH \qquad (2).$$

In the formula, $Rf^1$ is the same as that of the formula (1), and specific examples of the hydroxyl group-containing compound (II) include $HCF_2CF_2CH_2OH$ (II-1).

The fluorine-containing unsaturated compound (I), the hydroxyl group-containing compound (II), the compounds (I-1) to (I-6) and (II-1) herein may be abbreviated to the compound (I), the compound (II), the compounds (I-1) to (I-6) and (II-1), respectively.

In the present invention, a preferred combination of the compounds (I) and (II) is the combination of the compounds (I-1) and (1-2) and the compound (II-1), or the combination of the compounds (1-3), (I-4), (I-5), and (I-6) and the compound (II-1).

As described above, the compounds (I) and (II) are impurities contained in the fluorine-containing ether. Therefore, the amount of the compounds (I) and (II) in the non-aqueous solvent may be reduced to the above range (5,000 ppm or less in total based on the amount of the fluorine-containing ether) by previously purifying the fluorine-containing ether to be used in the present invention. Here, ppm is based on weight, and therefore the phrase "5,000 ppm or less based on the amount of the fluorine-containing ether" means the amount of 0.5 parts by weight or less based on 100 parts by weight of the fluorine-containing ether.

The total amount of the compounds (I) and (II) of more than 5,000 ppm is unfavourable because the electric double-layer capacitor will expand during a high temperature durability test. The hydroxyl group-containing compound (II) of the compounds (I) and (II) easily reacts with Li or an inorganic anion. Therefore, in cases where the hydroxyl group-containing compound (II) is present in the fluorine-containing ether, capacity loss tends to remarkable in a high temperature durability test. Further, if the fluorine-containing unsaturated compound (I) containing a double bond is largely present in the fluorine-containing ether, the compound (I) tends to easily react with water or the like in the electrolytic solution and decompose. The upper limit of the total amount of the compounds (I) and (II) is preferably 3,500 ppm, and more preferably 2,000 ppm, based on the amount of the fluorine-containing ether. The lower limit of the total amount of the compounds (I) and (II) is preferably as small as possible, and may be, for example, 20 ppm.

Further, since the HOMO energies of the compounds (I) and (II) determined by molecular activation calculation are each higher than that of the fluorine-containing ether represented by the formula (1), the oxidation resistance thereof is poor. Therefore, the compounds (I) and (II) decompose in high voltage batteries, resulting in battery deterioration. Thus, the fluorine-containing ether with a reduced amount of the compounds (I) and (II) enables suppression of the expansion of the electric double-layer capacitor.

The fluorine-containing ether represented by the formula (1) may be purified, for example, by rectification using a distillation column with five or more theoretical plates. A fluorine-containing ether that contains impurities (hereinafter, also referred to as fluorine-containing crude ether solution) is subjected to counter-current extraction using water as an extraction solvent (separating medium) for a fluoroalkyl alcohol.

Counter-current extraction is a kind of liquid-liquid extraction using a vertical extractor, and enables extraction of a fluoroalkyl alcohol as follows: a fluorine-containing crude ether solution with a larger specific gravity (e.g., specific gravity of about 1.5) is fed into the extractor from its upper part; water (specific gravity of 1.0) is fed into the extractor from its lower part; and the water is allowed to float from the bottom phase to the top phase as water droplets in the extractor optionally with stirring, thereby achieving intimate contact between the fluorine-containing crude ether solution and water. Thus, extraction by water droplets is performed. The water used for the extraction is removed from the upper part of the apparatus.

A typical counter-current extractor is a mixer-settler extractor with a multi-stage stirrer.

More preferred examples of the fluorine-containing ether represented by the formula (1), $HCF_2CF_2CH_2OCF_2CF_2H$ and $HCF_2CF_2CH_2OCF_2CFHCF_3$, are explained below.

$HCF_2CF_2CH_2OCF_2CF_2H$ is usually synthesized by reacting $HCF_2CF_2CH_2OH$ (compound (II-1)) with $CF_2{=}CF_2$. Therefore, $HCF_2CF_2CH_2OH$ (compound (II-1)) used as a starting material, and by products of the reaction, $CF_2{=}CFCH_{20}CF_2CF_2H$ (compound (I-1)) and $HCF_2CF{=}CHOCF_2CF_2H$ (compound (I-2)), may be left depending on a purification method.

$HCF_2CF_2CH_2OCF_2CFHCF_3$ is usually synthesized by reacting $HCF_2CF_2CH_2OH$ (compound (II-1)) with $CF_3CF{=}CF_2$. Therefore, $HCF_2CF_2CH_2OH$ (compound (II-1)) used as a starting material, and by products of the reaction, $CF_2{=}CFCH_2OCF_2CFHCF_3$ (compound (I-3)), $HCF_2CF_2CH_2OCF{=}CFCF_3$ (compound (I-4)), $HCF_2CF_2CH_2OCF_2CF{=}CF_2$ (compound (I-5)), and $HCF_2CF{=}CHOCF_2CFHCF_3$ (compound (I-6)), may be left depending on a purification method.

Therefore, in cases where the fluorine-containing ether represented by the formula (1) is $HCF_2CF_2OCH_2CF_2CF_2H$, a preferred combination of the compounds (I) and (II) is the combination of the compounds (I-1) and (I-2) and the compound (II-1). In cases where the fluorine-containing ether represented by the formula (1) is $HCF_2CF_2CH_2OCF_2CFHCF_3$, a preferred combination of the compounds (I) and (II) is the combination of the compounds (I-3), (I-4), (I-5), and (1-6) and the compound (II-1).

In the present invention, the non-aqueous solvent preferably contains a nitrile compound represented by the formula (3):

$$R^1\text{-}(CN)_n \qquad (3)$$

wherein $R^1$ is a C1-C10 alkyl group or a C1-C10 alkylene group, and n is 1 or 2, because output characteristics can be improved while high temperature durability is maintained.

Examples of the alkyl group include C1-C10 alkyl groups such as methyl, ethyl, propyl, isopropyl, butyl, isobutyl, tert-butyl, pentyl, neopentyl, hexyl, heptyl, octyl, nonyl, and decyl. Particularly, methyl and ethyl are preferred.

Examples of the alkylene group include C1-C10 alkylene groups such as methylene, ethylene, propylene, butylene, pentylene, hexylene, octylene, nonylene, and decylene. Particularly, propylene and ethylene are preferred.

Specific examples of the nitrile compound include acetonitrile ($CH_3$-CN), propionitrile ($CH_3$-$CH_2$-CN), and glutaronitrile (NC-$(CH_2)_3$-CN). Particularly, acetonitrile and propionitrile are preferred in terms of low resistance. Each of the nitrile compounds may be used alone or two or more of the nitrile compounds may be used in combination.

In cases where the nitrile compound is added, the volume ratio of the fluorine-containing ether represented by the formula (1) to the nitrile compound is preferably 90/10 to 1/99, more preferably 40/60 to 1/99, and still more preferably 30/70 to 1/99. The volume ratio in this range is preferred because the withstand voltage is maintained, excellent effects of decreasing the internal resistance is achieved, and the expansion is more strongly suppressed.

The proportion of the total volume of the fluorine-containing ether represented by the formula (1) and the nitrile compound is preferably 50 to 100% by volume, more preferably 60 to 100% by volume, and still more preferably 70 to 100% by volume, of the non-aqueous solvent.

In cases where the non-aqueous solvent contains solvent(s) other than the fluorine-containing ether represented by the formula (1) and the nitrile compound, the proportion of the other solvent(s) is preferably less than 50% by volume, more preferably less than 40% by volume, and still more preferably less than 30% by volume, of the non-aqueous solvent.

In the present invention, a reduction in the amount of the compounds (I) and (II) in the non-aqueous solvent used for the electric double-layer capacitor enables to, in the capacitor, improve withstand voltage, reduce internal resistance, and further improve long-term reliability, and particularly more suppress the expansion of the capacitor. In terms of further improvement in long-term reliability, the non-aqueous solvent may contain a sulfolane compound.

The sulfolane compound may be a fluorine-free sulfolane compound or fluorine-containing sulfolane compound.

Examples of the fluorine-free sulfolane compound include sulfolane and fluorine-free sulfolane derivatives represented by

[Chem. 1]

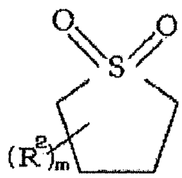

wherein $R^2$ represents a C1-C4 alkyl group, and m represents an integer of 1 or 2.

Particularly, sulfolane and the following sulfolane derivatives are preferred.

[Chem. 2]

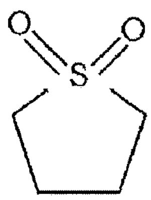 , 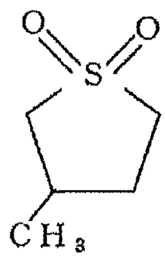 , 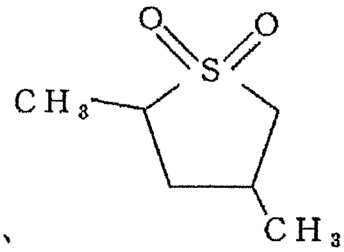

Examples of the fluorine-containing sulfolane compound include the fluorine-containing sulfolane compounds described in JP-A 2003-132944, and particularly, the following ones are preferred.

[Chem. 3]

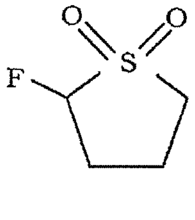,
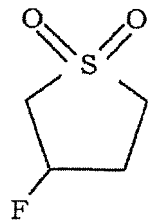,
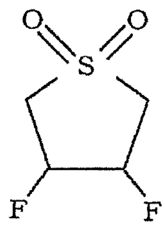,
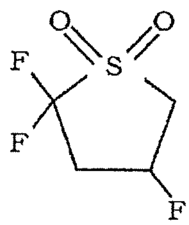,
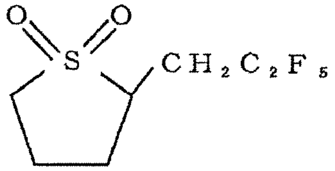,
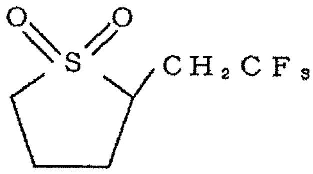,
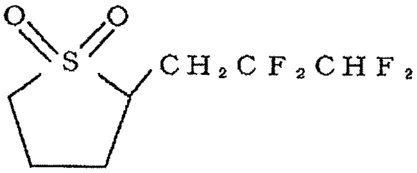

Among these, sulfolane, 3-methyl sulfolane, 2,4-dimethyl sulfolane are preferred, and particularly, sulfolane is preferred.

Each of these sulfolane compounds may be used alone or two or more of the sulfolane compounds may be used in combination.

In cases where the non-aqueous solvent contains the sulfolane compound, the amount of the sulfolane compound is preferably less than 50% by volume of the non-aqueous solvent. Addition of the sulfolane compound in the above volume range is preferred because it enables to improve the long-term reliability.

Other solvent(s) such as a cyclic carbonate and chain carbonate may be optionally blended.

Examples of the fluorine-free cyclic carbonate include ethylene carbonate (EC), propylene carbonate (PC), and vinylene carbonate. Particularly, propylene carbonate (PC) is preferred in terms of maintaining effects of decreasing the internal resistance and low-temperature characteristics. Each of the fluorine-free cyclic carbonates may be used alone or two or more of the fluorine-free cyclic carbonates may be used in combination.

Hereinafter, the electrolyte salt used in the present invention will be explained.

Examples of the electrolyte salt usable in the present invention include liquid salts (ionic liquids), inorganic polymer salts, and organic polymer salts, in addition to conventionally known ammonium salts and metallic salts. Particularly, ammonium salts are preferably used in the present invention.

Examples of the ammonium salts suitable as electrolyte salts include the following compounds.

(A) Tetraalkyl quaternary ammonium salt

For example, tetraalkyl quaternary ammonium salts represented by the formula (4):

[Chem. 4]

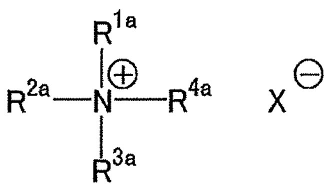 (4)

wherein $R^{1a}$, $R^{2a}$, $R^{3a}$, and $R^{4a}$ are the same as or different from one another and each represent a C1-C6 alkyl group optionally containing an ether bond; and X represents an anion, are preferred. A part of or all of the hydrogen atoms of these ammonium salts may be substituted with fluorine atoms and/or C1-C4 fluorinated alkyl groups, and such salts are also preferred because of the improvement in oxidation resistance.

Specific examples of the tetraalkyl quaternary ammonium salts include tetraalkyl quaternary ammonium salts represented by the formula (4-1):

[Chem. 5]

$$(R^{1a})_x(R^{2a})_yN^{\oplus} X^{\ominus} \qquad (4\text{-}1)$$

wherein $R^{1a}$, $R^{2a}$ and X are as defined above, x and y are the same as or different from each other, each represent an integer of 0 to 4, and satisfy the equation: x + y = 4; and alkyl ether group-containing trialkyl ammonium salts represented by the formula (4-2):

[Chem. 6]

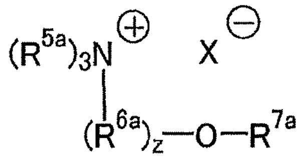

(4 − 2)

wherein $R^{5a}$ represents a C1-C6 alkyl group, $R^{6a}$ represents a C1-C6 divalent hydrocarbon group, $R^{7a}$ represents a C1-C4 alkyl group, z represents 1 or 2, and X represents an anion. Introduction of an alkyl ether group makes it possible to reduce the viscosity.

The anion $X^-$ may be an inorganic anion or an organic anion. Examples of the inorganic anion include $AlCl_4^-$, $BF_4^-$, $PF_6^-$, $AsF_6^-$, $TaF_6^-$, $I^-$, and $SbF_6^-$. Examples of the organic anion include $CF_3COO^-$, $CF_3SO_3^-$, $(CF_3SO_2)_2N^-$, and $(C_2F_5SO_2)_2N^-$.

Among these, $BF_4^-$, $PF_6^-$, $AsF_6^-$, and $SbF_6^-$ are preferred because of their good oxidation resistance and ion dissociation.

Specifically, preferred examples of tetraalkyl quaternary ammonium salts include $Et_4NBF_4$, $Et_4NClO_4$, $Et_4NPF_6$, $Et_4NAsF_6$, $Et_4NSbF_6$, $Et_4NCF_3SO_3$, $Et_4N(CF_3SO_2)_2N$, $Et_4NC_4F_9SO_3$, $Et_3MeNBF_4$, $Et_3MeNClO_4$, $Et_3MeNPF_6$, $Et_3MeNAsF_6$, $Et_3MeNSbF_6$, $Et_3MeNCF_3SO_3$, $Et_3MeN(CF_3SO_2)_2N$, and $Et_3MeNC_4F_9SO_3$. Particularly, $Et_4NBF_4$, $Et_4NPF_6$, $Et_4NSbF_6$, $Et_4NAsF_6$, $Et_3MeNBF_4$, N,N-diethyl-N-methyl-N-(2-methoxy ethyl) ammonium salts, and the like are preferred. Et herein represents an ethyl group, and Me herein represents a methyl group.

(B) Spiro-bipyrrolidinium salt

For example, spiro-bipyrrolidinium salts represented by the formula (5):

[Chem. 7]

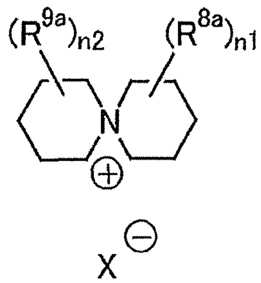

(5)

wherein $R^{8a}$ and $R^{9a}$ are the same as or different from each other and each represent a C1-C4 alkyl group, X represents an anion, n1 represents an integer of 0 to 5, and n2 represents an integer of 0 to 5, are preferred. A part of or all of the hydrogen atoms of these spiro-bipyridinium salts may be substituted with fluorine atoms and/or C1-C4 fluorinated alkyl groups, and such salts are also preferred because of the improvement in oxidation resistance.

Specific preferred examples of the anion $X^-$ may be the same as those in the case of the tetraalkyl quaternary ammonium salt (A).

Specific preferred examples of the spiro-bipyrrolidinium salts include the compounds represented by the following formula:

[Chem. 8]

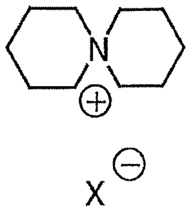

The spiro-bipyridinium salts are excellent in solubility, oxidation resistance, and ionic conductivity.

(C): Imidazolium salt

For example, imidazolium salts represented by the formula (6):

[Chem. 9]

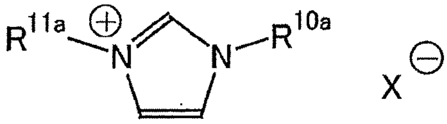

(6)

wherein $R^{10a}$ and $R^{11a}$ are the same as or different from each other and each represent a C1-C6 alkyl group; and X represents an anion, are preferred. A part of or all of the hydrogen atoms of these imidazolium salts may be substituted with fluorine atoms and/or C1-C4 fluorinated alkyl groups, and such salts are also preferred because of the improvement in oxidation resistance.

Specific preferred examples of the anion $X^-$ may be the same as those in the case of the tetraalkyl quaternary ammonium salt (A).

Specific preferred examples of the imidazolium salts include the compounds represented by the following formula:

[Chem. 10]

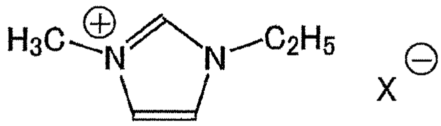

wherein X represents an anion.

These imidazolium salts are favorable because of their low viscosity and good solubility.

(D): N-alkylpyridinium salt

For example, N-alkylpyridinium salts represented by the formula (7):

[Chem. 11]

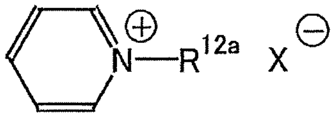

(7)

wherein $R^{12a}$ represents a C1-C6 alkyl group; and X represents an anion, are preferred. A part of or all of the hydrogen atoms of these N-alkylpyridinium salts may be substituted with fluorine atoms and/or C1-C4 fluorinated alkyl groups, and such salts are also preferred because of the improvement in oxidation resistance.

The anion X- may be the same as those in the case of the tetraalkyl quaternary ammonium salt (A).

Specific preferred examples of the N-alkylpyridinium salts include the compounds represented by the following formulae.

[Chem. 12]

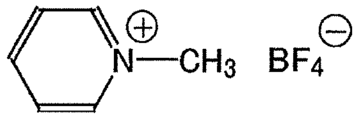
、
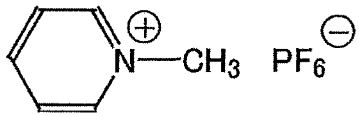
、
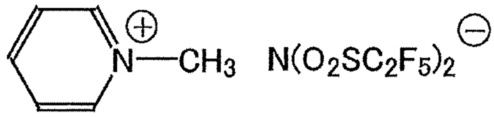
、
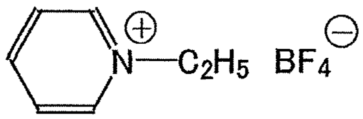
、
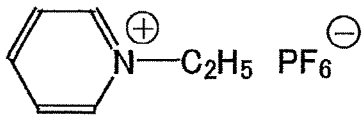
、
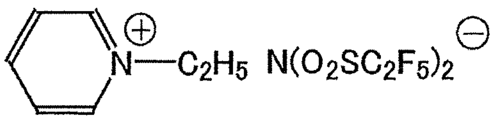
、

These N-alkylpyridinium salts are favolable because of their low viscosity and good solubility.

(E) N,N-dialkylpyrrolidinium salt

For example, N,N-dialkylpyrrolidinium salts represented by the formula (8):

[Chem. 13]

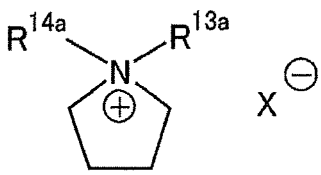

(8)

wherein $R^{13a}$ and $R^{14a}$ are the same as or different from each other and each represent a C1-C6 alkyl group; and X represents an anion, are preferred. A part of or all of the hydrogen atoms of these N,N-dialkylpyrrolidinium salts may be substituted with fluorine atoms and/or C1-C4 fluorinated alkyl groups, and such salts are also preferred because of the improvement in oxidation resistance.

Specific preferred examples of the anion $X^-$ may be the same as those in the case of the tetraalkyl quaternary ammonium salt (A).

Specific preferred examples of the N,N-dialkylpyrrolidinium salts include the compounds represented by the following formulae.

[Chem. 14]

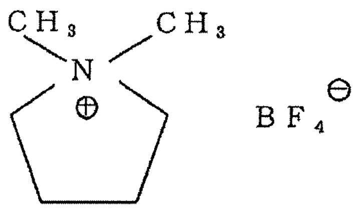
,
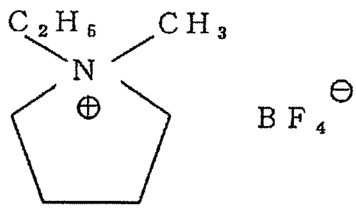
,
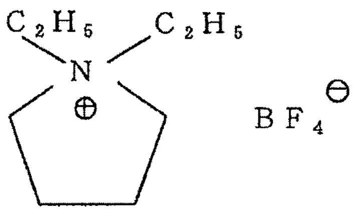
,
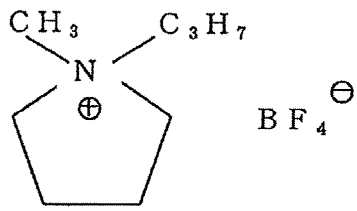
,
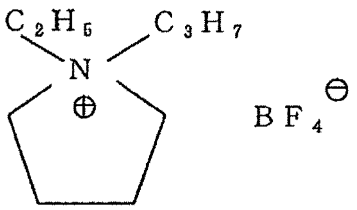
,
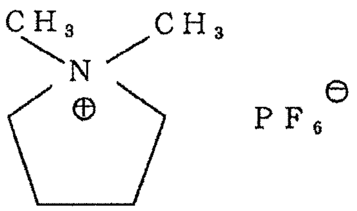
,
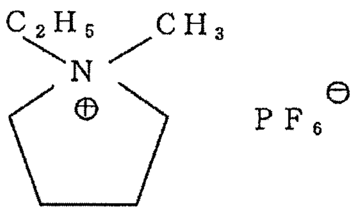
,

[Chem. 15]

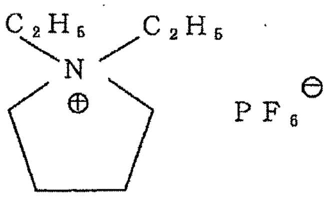
,
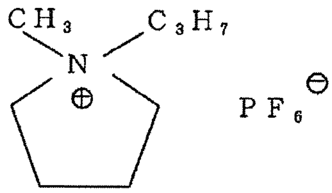
,
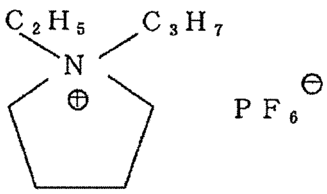
,
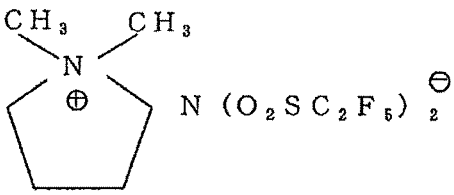
,
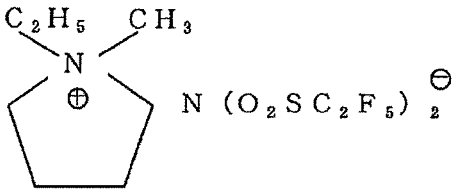
,
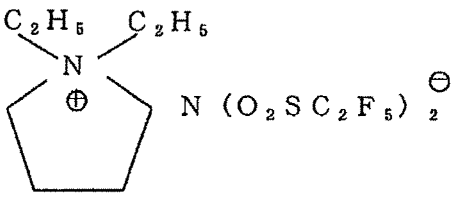
,
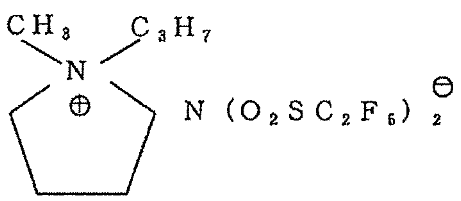
,
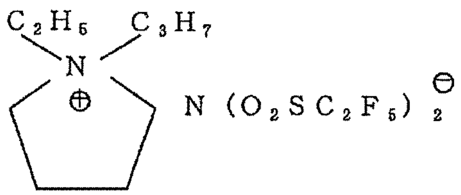

These N,N-dialkylpyrrolidinium salts are favolable because of their low viscosity and good solubility.

Among these ammonium salts, the tetraalkyl quaternary ammonium salts (A), spiro-bipyperrodinium salts (B), and imidazolium salts (C) are preferred in terms of the solubility, oxidation resistance, and ionic conductivity. The following ones are more preferred.

[Chem. 16]

$(Me)_x(Et)_yN^{\oplus}X^{\ominus}$,

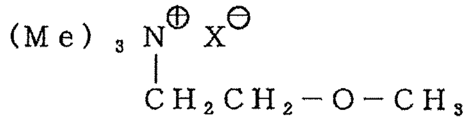
,

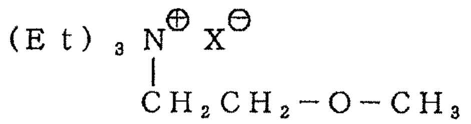
,

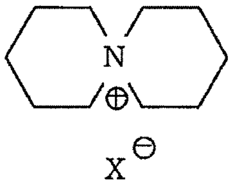
,

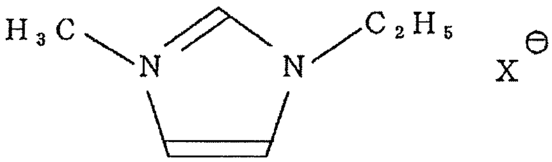

In the formulae, Me represents a methyl group; Et represents an ethyl group; X, x, and y are the same as those of the formula (4-1).

Alternatively, the electrolyte salt may be a lithium salt. Preferred examples of the lithium salt include $LiPF_6$, $LiBF_4$, $LiAsF_6$, $LiSbF_6$, and $LiN(SO_2C_2H_5)_2$.

In order to further increase the capacity, a magnesium salt may be used. Preferred examples of the magnesium salt include $Mg(ClO_4)_2$ and $Mg(OOC_2H_5)_2$.

Spirobipyrrolidinium tetrafluoroborate, triethyl methyl ammonium tetrafluoroborate, and tetraethylammonium tetrafluoroborate are preferred in terms of maintaining the low-temperature characteristics.

The concentration of the electrolyte salt changes depending on required current density, uses, and the kind of the electrolyte salt, and is preferably 0.3 mol/l or more, more preferably 0.5 mol/l or more, and particularly preferably 0.8 mol/l or more, and preferably 3.6 mol/l or less, more preferably 2.0 mol/l or less, and particularly preferably 1.6 mol/l or less.

The electrolytic solution used in the present invention is prepared by dissolving the electrolyte salt in the non-aqueous solvent.

In the present invention, the electrolytic solution may be combined with a polymer material that dissolves or swells in the solvent used in the non-aqueous electrolytic solution in the present invention so as to be a gel electrolytic solution in a (plasticized) gel form.

Examples of the polymer material include conventionally known polyethylene oxide, polypropylene oxide and modified compounds thereof (JP-A H08-222270, JP-A 2002-100405); polyacrylate polymers, polyacrylonitrile, and fluorine-containing resins such as polyvinylidene fluoride and vinylidene fluoride-hexafluoropropylene copolymers (JP-T H04-50672, JP-T H08-507407, JP-A H10-294131); and complexes of these fluorine-containing resins with hydrocarbon resins (JP-A H11-35765, JP-A H11-86630). In particular, polyvinylidene fluoride and vinylidene fluoride-hexafluoropropylene copolymers are preferably used as polymer materials for the gel electrolytic solution.

Alternatively, ion-conducting compounds disclosed in JP-A 2006-114401 may be used.

These ion-conducting compounds are non-crystalline fluorine-containing polyether compounds that contain a fluorine-containing group in a side chain and are represented by the formula (1-1):

P-(D)-Q (1-1)

wherein D is represented by the formula (2-1):

$$-(D1)_n-(FAE)_m-(AE)_p-(Y)_q- \qquad (2\text{-}1)$$

wherein D1 represents an ether unit containing a fluorine-containing ether group in its side chain and is represented by the formula (2a):

[Chem. 17]

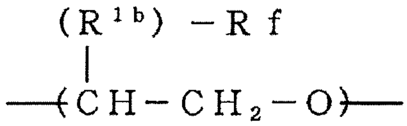

(2 a)

wherein Rf represents a fluorine-containing ether group optionally containing a crosslinkable functional group, and $R^{1b}$ represents a group or bond linking Rf to the trunk chain;

FAE represents an ether unit containing a fluorinated alkyl group in its side chain and is represented by the formula (2b):

[Chem. 18]

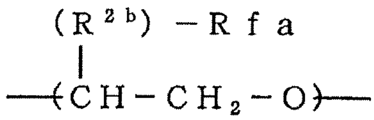

(2 b)

wherein Rfa represents a hydrogen atom or a fluorinated alkyl group optionally containing a crosslinkable functional group, and $R^{2b}$ represents a group or bond linking Rfa to the trunk chain;

AE represents an ether unit represented by the formula (2c) :

[Chem. 19]

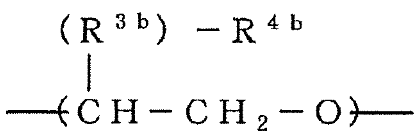

(2 c)

wherein $R^{4b}$ represents a hydrogen atom, an alkyl group optionally containing a crosslinkable functional group, an aliphatic cyclic hydrocarbon group optionally containing a crosslinkable functional group, or an aromatic hydrocarbon group optionally containing a crosslinkable functional group, and $R^{3b}$ represents a group or bond linking $R^{4b}$ to the trunk chain;

Y represents a unit containing at least one of the groups represented by the formulae (2d-1) to (2d-3):

[Chem. 20]

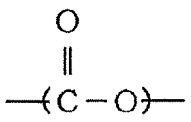

(2 d − 1) 、

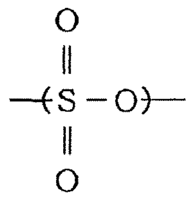

(2 d − 2) 、

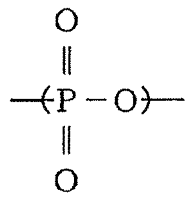

(2 d − 3)

n represents an integer of 0 to 200, m represents an integer of 0 to 200, p represents an integer of 0 to 10,000, q represents an integer of 1 to 100, n + m is not 0, and the arrangement of D1, FAE, AE and Y is not specified; and P and Q are the same as or different from each other and each represent an alkyl group optionally containing a fluorine atom and/or a crosslinkable functional group, a phenyl group optionally containing a fluorine atom and/or a crosslinkable functional group, -COOH, $-OR^3$ (in which $R^3$ is an alkyl group optionally containing a fluorine atom and/or a crosslinkable functional group), an ester group, or a carbonate group (when the end of D is an oxygen atom, P and Q are not -COOH, $-OR^3$, an ester group and a carbonate group).

The electrolytic solution used in the present invention may optionally contain other additives. Examples of other additives include metal oxides and glass. The electrolytic solution of the present invention may contain such other additives to the extent that the effects of the present invention are not lost.

Preferably, the electrolytic solution used in the present invention will neither freeze nor give a precipitate of the electrolyte salt even at low temperatures (for example, at 0°C and -20°C). Specifically, the electrolytic solution has a viscosity at 0°C of preferably 100 mPa·s or lower, more preferably 30 mPa·s or lower, and particularly preferably 15 mPa·s or lower. Specifically, the electrolytic solution has a viscosity at -20°C of preferably 100 mPa·s or lower, more preferably 40 mPa·s or lower, and particularly preferably 15 mPa·s or lower.

In the electric double-layer capacitor of the present invention, at least one of the positive electrode and the negative electrode is a polarizable electrode. The following electrodes, which are specifically described in JP-A H09-7896, may be used as polarizable and non-polarizable electrodes.

The polarizable electrode used in the present invention may be one mainly made of activated carbon and preferably containing inactivated carbon having a large specific surface area and a conductive material capable of imparting electronic conductivity, such as carbon black. This polarizable electrode can be prepared by various methods. For example, a polarizable electrode including activated carbon and carbon black can be prepared by mixing activated carbon powder, carbon black and phenol resin; and subjecting the mixture to press-molding and then to sintering in an inert gas atmosphere and activation in a steam atmosphere. Preferably, the polarizable electrode is bonded to a current collector with, for example, a conductive adhesive.

Alternatively, the polarizable electrode can be formed by kneading activated carbon powder, carbon black and a binder in the presence of an alcohol; forming the mixture into a sheet; and drying the sheet. Examples of the binder include polytetrafluoroethylene. The polarizable electrode may also be incorporated with a current collector by applying a slurry prepared by mixing activated carbon powder, carbon black, a binder, and a solvent to a metallic foil as a current collector to form a coating; and drying the coating.

In the electric double-layer capacitor, both the electrodes may be polarizable electrodes mainly made of activated carbon. Alternatively, one of the electrodes may be a non-polarizable electrode. In this case, for example, a positive electrode mainly made of a cell active material (e.g. a metal oxide) may be used in combination with a negative electrode that is a polarizable electrode mainly made of activated carbon or in combination with a negative electrode mainly made of a carbon material that is capable of reversibly occluding and releasing lithium ions.

In addition, carbonaceous materials such as carbon black, graphite, expansive graphite, porous carbon, carbon nanotube, carbon nanohorn and ketjen black may be used instead of or in combination with activated carbon.

Preferably, the non-polarizable electrode is mainly made of a carbon material capable of reversibly occluding and releasing lithium ions. Such an electrode is used after lithium ions are occluded in the carbon material. In this case, the electrolyte is a lithium salt. The electric double-layer capacitor having this structure achieves a higher withstand voltage of exceeding 4 V.

A preferred solvent for preparing slurry used for production of an electrode is a solvent capable of dissolving a binder, and is appropriately selected from N-methylpyrrolidone, dimethylformamide, toluene, xylene, isophorone, methyl ethyl ketone, ethyl acetate, methyl acetate, dimethyl phthalate, ethanol, methanol, butanol, and water, depending on the kind of a binder to be used.

Examples of the activated carbon for the polarizable electrode include phenol resin-based activated carbon, coconut shell-based activated carbon, and petroleum coke-based activated carbon. Among these, petroleum coke-based activated carbon and phenol resin-based activated carbon are preferred in terms of larger capacity. Such activated carbon may be prepared by activation treatment such as steam activation and molten KOH activation. Activated carbon obtained by molten KOH activation is preferably used because it increases the capacity.

Examples of a preferred conductive material for the polarizable electrode include carbon black, ketjen black, acetylene black, natural graphite, artificial graphite, metallic fibers, conductive titanium oxide, and ruthenium oxide. The amount of a conductive material such as carbon black used in the polarizable electrode is preferably 1 to 50% by weight based on the total amount of the conductive material and activated carbon. This is for the purpose of achieving satisfactory conductivity (low internal resistance) and also because an excessively high conductive material content decreases the capacity of a product.

In order to produce an electric double-layer capacitor with larger capacity and lower internal resistance, activated carbon for the polarizable electrode is preferably one having an average particle size of 20 $\mu$m or less and a specific surface area of 1500 to 3000 $m^2/g$. Examples of carbon materials that can be preferably used for electrodes mainly made of a carbon material capable of reversibly occluding and releasing lithium ions include natural graphite, artificial graphite, graphitized mesocarbon particles, graphitized whiskers, vapor grown carbon fibers, calcined products of furfuryl alcohol resins, and calcined products of novolak resins.

Any current collector may be used as long as it is corrosion resistant both chemically and electrochemically. Preferred examples of a current collector for a polarizable electrode mainly made of activated carbon include current collectors of stainless steel, aluminum, titanium, or tantalum. Among these, stainless steel and aluminum are particularly preferred materials in both terms of characteristics of the resulting electric double-layer capacitor and costs. Preferred examples of a current collector for an electrode mainly made of a carbon material capable of reversibly occluding and releasing lithium ions include current collectors of stainless steel, copper or nickel.

Lithium ions are preliminarily occluded in the carbon material capable of reversibly occluding and releasing lithium ions, for example, by the following methods: (1) preliminarily mixing lithium powder with the carbon material capable of reversibly occluding and releasing lithium ions; (2) mounting a lithium foil on an electrode made of a binder and the carbon material capable of reversibly occluding and releasing lithium ions, and immersing the electrode in an electrolytic solution containing a lithium salt dissolved therein while maintaining electrical contact between the lithium foil and the electrode, so that lithium is ionized and taken into the carbon material; and (3) placing a lithium metal on the positive side and an electrode made of a binder and the carbon material capable of reversibly occluding and releasing lithium ions on the negative side, and immersing them in a non-aqueous electrolytic solution containing a lithium salt as an electrolyte, and applying a current such that lithium is electrochemically taken into the carbon material, in an ionized form.

Commonly known are electric double-layer capacitors such as a wound electric double-layer capacitor, a laminated electric double-layer capacitor, and a coin-shaped electric double-layer capacitor. The electric double-layer capacitor of the present invention may be such capacitors.

For example, a wound electric double-layer capacitor is assembled in such a way that positive and negative electrodes each formed of a laminate (electrode) of a current collector and an electrode layer, and a separator between the electrodes are rolled together to prepare a wound element, the wound element is put into a casing made of aluminum or the like, the casing is filled with an electrolytic solution, preferably, a non-aqueous electrolytic solution, and the casing is tightly sealed with a sealing material made of rubber.

The separator of the present invention may be made of a known material and may have a known structure. For example, a polyethylene porous membrane, polypropylene fibers, glass fibers, or a nonwoven fabric of cellulose fiber may be used.

Further, known methods may be used for making a laminated electric double-layer capacitor comprising a laminate of sheet-like positive and negative electrodes, and an electrolytic solution and separator placed between the electrodes, or a coin-shaped electric double-layer capacitor comprising coin-shaped positive and negative electrodes fixed using a gasket, and an electrolytic solution and separator placed between the electrodes.

Further, the present invention relates to a non-aqueous electrolytic solution for an electric double-layer capacitor, comprising a non-aqueous solvent, and an electrolyte salt. The non-aqueous solvent includes a fluorine-containing ether,

a fluorine-containing unsaturated compound (I), and a hydroxyl group-containing compound (II), the fluorine-containing ether being represented by the formula (1):

$$Rf^1\text{-O-}Rf^2 \qquad (1)$$

wherein $Rf^1$ and $Rf^2$ are the same as or different from each other, and are each a C1-C10 alkyl group or a C1-C10 fluoro-alkyl group, provided that at least one of $Rf^1$ and
$Rf^2$ is a fluoro-alkyl group, the hydroxyl group-containing compound (II) being represented by the formula (2):

$$Rf^1OH \qquad (2)$$

wherein $Rf^1$ is as defined above,
the total amount of the compounds (I) and (II) being 5,000 ppm or less based on the amount of the fluorine-containing ether.

A non-aqueous solvent and an electrolyte salt used for the non-aqueous electrolytic solution for an electric double-layer capacitor of the present invention, and the amounts thereof to be added are as defined above.

The moisture content of the non-aqueous electrolytic solution for an electric double-layer capacitor of the present invention is preferably 20 ppm or less. The moisture content within the above range is preferred in terms of long-term reliability, particularly, suppression of the expansion of the capacitor. Here, ppm is based on weight, and therefore the moisture content by ppm represents 0.002 parts by weight or less in 100 parts by weight of the non-aqueous electrolytic solution used in the present invention.

The lower limit of the moisture content is preferably as small as possible.

The moisture content of the non-aqueous electrolytic solution for an electric double-layer capacitor may be controlled to 20 ppm or less by any method. For example, dehumidification using a drying agent or moisture removal by distillation may be used. Particularly, dehumidification using a drying agent is preferred in terms of maintaining a component ratio of the electrolytic solution.

The drying agent is not particularly limited as long as it is non-reactive with components (solvent, electrolyte salt, additives) of the electrolytic solution and does not eliminate (adsorb) such components. Specific examples of the drying agent include zeolite and silica gel.

For example, the moisture content can be reduced to 20 ppm or less, for example, by adding 3 to 7 parts by weight of the drying agent such as zeolite or silica gel based on 100 parts by weight of the electrolytic solution and allowing the solution to stand for twelve hours or more.

The drying treatment is performed preferably under the condition of a dew point of -50°C to -80°C (a moisture content of about 39 ppm to about 0.5 ppm) in order to keep out surrounding moisture. The temperature may be a room temperature.

Further, the positive and negative electrodes are preferably fully dried before assembled into the electric double-layer capacitor in order to prevent an increase in the moisture content of the filled electrolytic solution.

The drying treatment may be performed by any method as long as the components of the wound element, such as positive and negative electrodes, a separator, and a current collector, do not deteriorate. Specific examples of the method include moisture evaporation by heating, moisture evaporation under reduced pressure, and a heating under reduced pressure.

Particularly, heating under reduced pressure is preferred because the method enables to reduce the moisture content comparatively in a short time. Specifically, the heating is performed under reduced pressure of 10 Pa or less at 90 to 150°C.

The temperature of the dried electrolytic solution may be cooled to room temperature using dried air. The moisture content of the dried air is desirably 10 ppm or less and further desirably 2.5 ppm or less.

Members that are potentially in contact with the electrolytic solution, such as the casing and sealing material of the electric double-layer capacitor, are preferably preliminarily dried to reduce their moisture contents in order to prevent an increase in the moisture content of the filled electrolytic solution.

A method and conditions employed for drying the casing are preferably similar to those in the case of the wound element. The sealing material is commonly made of rubber, and therefore dried at rather low heating temperatures, e.g., at about 70 to 90°C.

Further, the electric double-layer capacitor is desirably assembled in a dry environment. Specifically, a dew point is preferably -40°C (moisture content of about 127 ppm) to -60°C (moisture content of about 10 ppm), and more preferably -50°C (moisture content of about 39 ppm) to -60°C (moisture content of about 10 ppm). The temperature is preferably room temperature, and the pressure may be ordinary pressure.

The non-aqueous electrolytic solution of the present invention is used for an electric double-layer capacitor, and further useful as electrolytic solutions for various electrochemical devices. Examples of electrochemical devices include lithium secondary batteries, radical batteries, solar cells (especially, dye-sensitized solar cells), fuel cells, various

electrochemical sensors, electrochromic devices, electrochemical switching devices, aluminum electrolytic capacitors, and tantalum electrolytic capacitors. In particular, the electrolytic solution of the present invention is suitable for lithium secondary batteries. The electrolytic solution of the present invention can also be used as, for example, an ionic conductor for an antistatic coating material.

EXAMPLES

The present invention is described below in more detail with reference to Examples and Comparative Examples, but is not limited only to these Examples.

In the present invention, measurement was performed as follows.

(1) Composition analysis

NMR method: AC-300 produced by BRUKER was used.
$^{19}$F-NMR: Measurement condition: 282 MHz (trichlorofluoromethane = 0 ppm)
$^{1}$H-NMR:
Measurement condition: 300 MHz (tetramethylsilane = 0 ppm)

(2) Concentration (GC%) analysis

Gas chromatography (GC) method: GC-17A produced by Shimadzu Corporation was used.
Column: DB624 (Length: 60 m, I.D.: 0.32 mm, Film: 1.8 μm) Measurement limit: 0.001%

(3) Measurement of moisture content

An electrolytic solution was prepared in a moisture-controlled atmosphere (dew point of -50 to -80°C), and was drawn, as a sample, into a syringe that is dried under reduced pressure of 10 Pa or less at 70°C for 12 hours or more. The moisture content of the sample was measured with moisture detection apparatus using the Karl Fischer method (Karl Fischer Moisture Titrator produced by KYOTO ELECTRONICS MANUFACTURING CO., LTD.). The measurement conditions were a temperature of 25°C and a dew point of-50°C to -80°C.

Synthesis Example 1 Synthesis of $HCF_2CF_2CH_2OCF_2CF_2H$

A system of a 6-L stainless steel autoclave was evacuated, and the autoclave was charged with potassium hydroxide (401 g) (7.15 mol), water (1604 mL), and 2,2,3,3-tetrafluoro-1-propanol: $HCF_2CF_2CH_2OH$ (boiling point of 109°C, specific gravity of 1.4) (1,716 g) (13 mol) as a fluoroalkyl alcohol. Then, the system was evacuated and purged with nitrogen 20 times at room temperature. After evacuation of the system, tetrafluoroethylene (TFE) was introduced thereinto until the pressure reached 0.1 MPa, and the temperature of the reaction system was raised to 85°C. After the temperature in the system reached 85°C, TFE was added thereto in small portions while the reaction pressure was maintained at 0.5 to 0.8 MPa. The temperature in the system was maintained in the range of 75 to 95°C.

When the amount of TFE added reached 0.5 mole amount relative to 1 mole of the fluoroalkyl alcohol, the addition of TFE was stopped and the reaction was continuously carried out with stirring. When the reduction in the pressure in the autoclave was stopped, the temperature in the autoclave was reduced to room temperature, unreacted TFE was discharged, and the reaction was completed. The reaction time was 5 hours.

The lower layer of the resulting product solution includes $HCF_2CF_2CH_2OCF_2CF_2H$ (boiling point of 92°C, specific gravity of 1.52) as a fluorine-containing ether. The fluorine-containing ether product solution in the lower layer was composed of 98.7% of a fluorine-containing ether, 1.02% of $HCF_2CF_2CH_2OH$ (compound (II-1)), 0.05% of $CF_2$=$CFCH_{20}CF_2CF_2H$ (compound (I-1)), and 0.23% of $HCF_2CF$=$CHOCF_2CF_2H$ (compound (I-2)). The composition was analyzed by GC.

1,500 g of the fluorine-containing ether product solution obtained in Synthesis Example 1 was prepared as a fluorine-containing ether crude solution 1. The solution 1 was subjected to counter-current extraction under the following conditions using a mixer-settler extractor. Mixer-settler extractor: (column height of 3,300 mm, inside diameter of 200 mm)

Number of steps: 24 steps

Stirring speed: 285 rpm
Heavy liquid feed rate: 160 kg/hr
Light liquid: Pure water
Light liquid feed rate: 100 kg/hr
Treatment temperature: 27°C
Treatment time: 0.01 hours

The first drops, which are about 5% of the distillate, were disposed, and then rectified solutions A, B, and C of the fluorine-containing ether ($HCF_2CF_2CH_2OCF_2CF_2H$) were prepared by sequentially collecting distillate as equal amounts of samples. The solutions A, B, and C each contained different amounts of the compounds (I-1), (I-2), and (II-1) (Table 1).

[Table 1]

| | Purity (%) | Amount (ppm) | | | Total amount of compounds (I-1), (I-2) and (II-1) (ppm) |
|---|---|---|---|---|---|
| | | Compound (I-1) | Compound (I-2) | Compound (II-1) | |
| Fluorine-containing ether crude solution 1 | 98.70 | 500 | 2300 | 10200 | 13000 |
| Rectified solution A | 99.25 | 400 | 2400 | 4600 | 7400 |
| Rectified solution B | 99.50 | 200 | 2200 | 2600 | 5000 |
| Rectified solution C | 99.80 | 80 | 1900 | 10 | 1990 |

Synthesis Example 2 Synthesis of $HCF_2CF_2CH_2OCF_2CFHCF_3$

A system of a 3-L stainless steel autoclave was evacuated, and the autoclave was charged with potassium hydroxide (84 g) (1.35 mol), water (800 mL), and 2,2,3,3-tetrafluoro-1-propanol: $HCF_2CF_2CH_2OH$ (boiling point of 109°C, specific gravity of 1.4) (600 g) (4.5 mol) as a fluoroalkyl alcohol. Then, the system was evacuated and purged with nitrogen 20 times at room temperature. After evacuation of the system, hexafluoropropene: $CF_2=CFCF_3$ (681 g) (4.5 mol) was introduced thereinto until the pressure reached 0.1 MPa, and the temperature of the reaction system was raised to 85°C. After the temperature in the system reached 85°C, $CF_2=CFCF_3$ was added thereto in small portions while the reaction pressure was maintained at 0.5 to 0.8 MPa. The temperature in the system was maintained in the range of 91 to 111°C.

When the amount of $CF_2=CFCF_3$ added reached 0.5 mole amount relative to 1 mole of the fluoroalkyl alcohol, the addition of $CF_2=CFCF_3$ was stopped and the reaction was continuously carried out with stirring. When the reduction in the pressure in the autoclave was stopped, the temperature in the autoclave was reduced to room temperature, unreacted $CF_2=CFCF_3$ was discharged, and the reaction was completed. The reaction time was 6 hours.

The lower layer of the resulting product solution includes $HCF_2CF_2CH_2OCF_2CFHCF_3$ (boiling point of 108°C, specific gravity of 1.61) as a fluorine-containing ether. The fluorine-containing ether product solution in the lower layer was composed of 98.4% of a fluorine-containing ether, 0.92% of $HCF_2CF_2CH_2OH$ (compound (II-1)), 0.05% of $F_2=CFCH_2OCF_2CFHCF_3$ (compound (I-3)), 0.24% of $HCF_2CF_2CH_2OCF=CFCF_3$ (compound (I-4)), 0.27% of $HCF_2CF_2CH_2OCF_2CF=CF_2$ (compound (I-5)), and 0.12% of $HCF_2CF=CHOCF_2CFHCF_3$ (compound (I-6)). The composition was analysed by GC.

725 g of the fluorine-containing ether product solution obtained in Synthesis Example 2 was prepared as a fluorine-containing ether crude solution 2. The solution 2 was subjected to counter-current extraction under the following conditions using a mixer-settler extractor.

Mixer-settler extractor: (column height of 3,300 mm, inside diameter of 200 mm)
Number of steps: 24 steps
Stirring speed: 285 rpm
Heavy liquid feed rate: 160 kg/hr
Light liquid: Pure water
Light liquid feed rate: 100 kg/hr
Treatment temperature: 27°C
Treatment time: 0.01 hour

The first drops, which are about 5% of the distillate, were disposed, and then rectified solutions D, E, and F of the fluorine-containing ether ($HCF_2CF_2CH_2OCF_2CFHCF_3$) were prepared by sequentially collecting the distillate as equal amounts of samples. The solutions D, E, and F each contained different amounts of the compounds (I-3), (I-4), (I-5), (1-6), and (II-1) (Table 2).

[Table 2]

| | Purity (%) | Amount (ppm) | | | | | Total amount of compounds (I-3) to (I-6), and (II-1) (ppm) |
|---|---|---|---|---|---|---|---|
| | | Compound (I-3) | Compound (I-4) | Compound (I-5) | Compound (I-6) | Compound (II-1) | |
| Fluorine-containing ether crude solution 2 | 98.40 | 500 | 2400 | 2700 | 1200 | 9200 | 16000 |
| Rectified solution D | 99.20 | 300 | 2100 | 900 | 700 | 4000 | 8000 |
| Rectified solution E | 99.60 | 200 | 1200 | 700 | 300 | 1600 | 4000 |
| Rectified solution F | 99.95 | 80 | 300 | 30 | 10 | 80 | 500 |

Example 1

(Production of electrode)

Slurry for an electrode was prepared by mixing activated carbon particles (100 parts by weight) (RP20, produced by KURARAY CHEMICAL CO., LTD.), acetylene black (3 parts by weight) (DENKA BLACK FX-35, produced by DENKI KAGAKU KOGYO KABUSHIKI KAISHA), as a conduction aid, Ketjen Black (12 parts by weight) (carbon ECP600JD, produced by Lion Corporation), PVdF binder (8 parts by weight) (KF-7200, produced by KUREHA CORPORATION), and Organosol (2 parts by weight, solid equivalent) (dispersion solvent for PTFE and PVdF).

An edged aluminum (20CB, produced by JCC, thickness of about 20 μm) was prepared as a current collector, and a conductive coating material (Varniphite T602, produced by Nippon Graphite Industries, ltd.) was applied to the both surfaces of the current collector using coating apparatus to form conductive layers (thickness: 7 μm).

Next, the slurry for an electrode prepared above was applied to the conductive layers formed on the surfaces of the current collector using coating apparatus to form electrode layers (thickness of a positive electrode: 103 μm, thickness of a negative electrode: 83 μm). Thus, an electrode was produced.

Note that a current collector, a conductive layer, and an active carbon layer are collectively referred to as an electrode hereinbelow.

(Preparation of electrolytic solution 1)

A non-aqueous solvent for dissolving an electrolyte salt was prepared by mixing acetonitrile and a rectified solution C of $HCF_2CF_2CH_2OCF_2CF_2H$ at a volume ratio of 80/20. To the non-aqueous solvent for dissolving an electrolyte salt was added triethylmethylammonium tetrafluoroborate $(TEMA)BF_4$ to a concentration of 1.2 mol/L. The salt was uniformly dissolved. Molecular sieves were added to the resulting non-aqueous electrolytic solution in an amount of 5% by weight of the solution, and the solution was allowed to stand for 10 hours. Then, the molecular sieves were removed by filtration, and the non-aqueous electrolytic solution was dried. The moisture content of the dried non-aqueous electrolytic solution was 20 ppm.

(Preparation of laminated cell-type electric double-layer capacitor)

The above electrode was cut into a predetermined size (20 x 72 mm), and an electrode lead was welded to the aluminum face of the current collector. The resulting electrodes were put in a laminated container (item number: D-EL 40H, produced by Dai Nippon Printing Co., Ltd.). A separator prepared by cutting TF45-30 (produced by NIPPON KODOSHI CORPORATION) into a predetermined size (30 x 82 mm) was placed between the electrodes. An electrolytic solution was poured into the container in a dry chamber for electrolytic solution impregnation. The container was sealed, and thereby a laminated cell was produced.

Example 2

A laminated cell-type electric double-layer capacitor was produced as in Example 1 except that an electrolytic solution 2 was used.

(Preparation of electrolytic solution 2)

A solvent for dissolving an electrolyte salt was prepared by mixing acetonitrile and a rectified solution B of $HCF_2CF_2CH_2OCF_2CF_2H$ at a volume ratio of 80/20. To the solvent for dissolving an electrolyte salt was added triethylmethylammonium tetrafluoroborate $(TEMA)BF_4$ to a concentration of 1.2 mol/L. The salt was uniformly dissolved. The resulting non-aqueous electrolytic solution was dried by the same method as in Example 1. The moisture content of the dried non-aqueous electrolytic solution was 20 ppm.

Comparative Example 1

A laminated cell-type electric double-layer capacitor was produced as in Example 1 except that an electrolytic solution 3 was used.

(Preparation of electrolytic solution 3)

A solvent for dissolving an electrolyte salt was prepared by mixing acetonitrile and a fluorine-containing crude ether solution 1 (crude $HCF_2CF_2CH_2OCF_2CF_2H$) at a volume ratio of 80/20. To the solvent for dissolving an electrolyte salt was added triethylmethylammonium tetrafluoroborate $(TEMA)BF_4$ to a concentration of 1.2 mol/L. The salt was uniformly dissolved. The resulting non-aqueous electrolytic solution was dried by the same method as in Example 1. The moisture content of the dried non-aqueous electrolytic solution was 20 ppm.

Comparative Example 2

A laminated cell-type electric double-layer capacitor was produced as in Example 1 except that an electrolytic solution 4 was used.

(Preparation of electrolytic solution 4)

A solvent for dissolving an electrolyte salt was prepared by mixing acetonitrile and a rectified solution A of $HCF_2CF_2CH_2OCF_2CF_2H$ at a volume ratio of 80/20. To the solvent for dissolving an electrolyte salt was added triethylmethylammonium tetrafluoroborate $(TEMA)BF_4$ to a concentration of 1.2 mol/L. The salt was uniformly dissolved. The resulting non-aqueous electrolytic solution was dried by the same method as in Example 1. The moisture content of the dried non-aqueous electrolytic solution was 20 ppm.

Comparative Example 3

A laminated cell-type electric double-layer capacitor was produced as in Example 1 except that an electrolytic solution 5 was used.

(Preparation of electrolytic solution 5)

A solvent for dissolving an electrolyte salt was prepared by mixing acetonitrile and a rectified solution C of $HCF_2CF_2CH_2OCF_2CF_2H$ containing 7,000 ppm of a compound (I-1) at a volume ratio of 80/20. To the solvent for dissolving an electrolyte salt was added triethylmethylammonium tetrafluoroborate $(TEMA)BF_4$ to a concentration of 1.2 mol/L. The salt was uniformly dissolved. The resulting non-aqueous electrolytic solution was dried by the same method as in Example 1. The moisture content of the dried non-aqueous electrolytic solution was 20 ppm.

Comparative Example 4

A laminated cell-type electric double-layer capacitor was produced as in Example 1 except that an electrolytic solution 6 was used.

(Preparation of electrolytic solution 6)

A solvent for dissolving an electrolyte salt was prepared by mixing acetonitrile and a rectified solution C of $HCF_2CF_2CH_2OCF_2CF_2H$ containing 7,000 ppm of a compound (II-1) at a volume ratio of 80/20. To the solvent for dissolving an electrolyte salt was added triethylmethylammonium tetrafluoroborate $(TEMA)BF_4$ to a concentration of 1.2 mol/L. The salt was uniformly dissolved. The resulting non-aqueous electrolytic solution was dried by the same method as in Example 1. The moisture content of the dried non-aqueous electrolytic solution was 20 ppm.

(Evaluation of capacitor characteristics)

The obtained electric double-layer capacitors were tested for long-term reliability (capacity retention, internal resistance increase rate, expansion).

(1) Capacity retention and internal resistance increase rate

Measurement of the capacity and internal resistance was performed in such a way that a laminated capacitor was placed into a constant-temperature bath in which the temperature was controlled at 60°C, and a voltage of 3.0 V was applied to the capacitor for 500 hours. The measurement was performed at the beginning (0 hour from the start of the voltage application) of the voltage application, after 294 hours, 356 hours, and 500 hours, from the start of the voltage application. The capacity retention (%) and the internal resistance increase rate were calculated from the following formula using the resulting measurement values. Tables 3 and 4 show the results.

[Formula 1]

$$\text{Capacity retention (\%)} = \frac{\text{Capacity at each time}}{\text{Capacity before evaluation ( beginning )}} \times 100$$

[Formula 2]

$$\text{Internal resistance increase rate} = \frac{\text{Internal resistance at each time}}{\text{Internal resistance increase rate before evaluation ( beginning )}}$$

With capacity retention after 500 hours of 70% or higher and an internal resistance increase rate up to twice the initial value, the capacitor is considered to have excellent load characteristics at 60°C, excellent cycle characteristics and rate performance for use at room temperature, and thus have long-term reliability.

(2) Measurement of expansion

In the case of a laminated cell before the long-term reliability test, the cell was measured for the original thickness, and then the thickness increase due to expansion was determined relative to the original thickness. The original thickness was 0.58 ± 0.02 mm.

[Table 3]

| | | 0 hour (beginning) | 294 hours | 356 hours | 500 hours |
|---|---|---|---|---|---|
| Example 1 | Capacitance (F) | 3.9 | 3.6 | 3.5 | 3.4 |
| | Capacitance retention (%) | 100 | 92 | 89 | 88 |
| | Internal resistance (mΩ) | 140 | 140 | 154 | 168 |
| | Internal resistance increase rate | 1.0 | 1.0 | 1.1 | 1.2 |
| | Thickness of cell (mm) | 0.5800 | 0.5806 | 0.5874 | 0.5890 |
| | Expansion (mm) | 0 | 0.0006 | 0.0074 | 0.0090 |
| Example 2 | Capacitance (F) | 3.9 | 3.5 | 3.4 | 3.4 |
| | Capacitance retention (%) | 100 | 91 | 87 | 86 |
| | Internal resistance (mΩ) | 140 | 155 | 169 | 172 |
| | Internal resistance increase rate | 1.0 | 1.1 | 1.2 | 1.2 |
| | Thickness of cell (mm) | 0.5800 | 0.5815 | 0.5887 | 0.5934 |
| | Expansion (mm) | 0 | 0.0015 | 0.0087 | 0.0134 |

[Table 4]

| | | 0 hour (beginning) | 294 hours | 356 hours | 500 hours |
|---|---|---|---|---|---|
| Comparative Example 1 | Capacitance (F) | 3.9 | 3.2 | 3.1 | 3.0 |
| | Capacitance retention (%) | 100 | 82 | 79 | 78 |
| | Internal resistance (mΩ) | 140 | 171 | 198 | 211 |
| | Internal resistance increase rate | 1.0 | 1.2 | 1.4 | 1.5 |
| | Thickness of cell (mm) | 0.5800 | 0.6292 | 0.6394 | 0.6427 |
| | Expansion (mm) | 0 | 0.0492 | 0.0594 | 0.0627 |
| Comparative Example 2 | Capacitance (F) | 3.9 | 3.3 | 3.2 | 3.1 |
| | Capacitance retention (%) | 100 | 85 | 83 | 80 |
| | Internal resistance (mΩ) | 140 | 171 | 180 | 200 |
| | Internal resistance increase rate | 1.0 | 1.2 | 1.3 | 1.4 |
| | Thickness of cell (mm) | 0.5800 | 0.6182 | 0.6273 | 0.6347 |
| | Expansion (mm) | 0 | 0.0382 | 0.0473 | 0.0547 |
| Comparative Example 3 | Capacitance (F) | 3.9 | 3.2 | 3.2 | 3.1 |
| | Capacitance retention (%) | 100 | 83 | 82 | 79 |
| | Internal resistance (mΩ) | 140 | 169 | 180 | 195 |
| | Internal resistance increase rate | 1.0 | 1.2 | 1.3 | 1.4 |
| | Thickness of cell (mm) | 0.5800 | 0.6253 | 0.6334 | 0.6404 |
| | Expansion (mm) | 0 | 0.0453 | 0.0534 | 0.0604 |

(continued)

| | | 0 hour (beginning) | 294 hours | 356 hours | 500 hours |
|---|---|---|---|---|---|
| Comparative Example 4 | Capacitance (F) | 3.9 | 3.3 | 3.2 | 3.1 |
| | Capacitance retention (%) | 100 | 84 | 83 | 79 |
| | Internal resistance (mΩ) | 140 | 171 | 182 | 197 |
| | Internal resistance increase rate | 1.0 | 1.2 | 1.3 | 1.4 |
| | Thickness of cell (mm) | 0.5800 | 0.6242 | 0.6354 | 0.6416 |
| | Expansion (mm) | 0 | 0.0442 | 0.0554 | 0.0616 |

Example 3

(Production of electrode)

Slurry for an electrode was prepared by mixing activated carbon particles (100 parts by weight) (RP20, produced by KURARAY CHEMICAL CO., LTD.), acetylene black (3 parts by weight) (DENKA BLACK FX-35, produced by DENKI KAGAKU KOGYO KABUSHIKI KAISHA), as a conduction aid, Ketjen Black (12 parts by weight) (carbon ECP600JD, produced by Lion Corporation), PVdF binder (8 parts by weight) (KF-7200, produced by KUREHA CORPORATION), and Organosol (2 parts by weight, solid equivalent) (dispersion solvent for PTFE and PVdF).

An edged aluminum (20CB, produced by JCC, thickness of about 20 μm) was prepared as a current collector, and a conductive coating material (Varniphite T602, produced by Nippon Graphite Industries, ltd.) was applied to the both surfaces of the current collector using coating apparatus to form conductive layers (thickness: 7 μm).

Next, the slurry for an electrode prepared above was applied to the conductive layers formed on the both surfaces of the current collector using coating apparatus to form electrode layers (thickness of a positive electrode: 103 μm, thickness of a negative electrode: 83 μm). Thus, an electrode was produced.

Note that a current collector, a conductive layer, and an activated carbon layer are collectively referred to as an electrode hereinbelow.

(Preparation of electrolytic solution 7)

A non-aqueous solvent for dissolving an electrolyte salt was prepared by mixing acetonitrile and a rectified solution F of $HCF_2CF_2CH_2OCF_2CFHCF_3$ at a volume ratio of 80/20. To the non-aqueous solvent for dissolving an electrolyte salt was added triethylmethylammonium tetrafluoroborate $(TEMA)BF_4$ to a concentration of 1.2 mol/L. The salt was uniformly dissolved. The resulting non-aqueous electrolytic solution was dried by the same method as in Example 1. The moisture content of the dried non-aqueous electrolytic solution was 20 ppm.

(Preparation of laminated cell-type electric double-layer capacitor)

The above electrode was cut into a predetermined size (20 x 72 mm), and an electrode lead was welded to the aluminum face of the current collector. The resulting electrodes were put in a laminated container (item number: D-EL 40H, produced by Dai Nippon Printing Co., Ltd.). A separator prepared by cutting TF45-30 (produced by NIPPON KODOSHI CORPORATION) into a predetermined size (30 x 82 mm) was placed between the electrodes. An electrolytic solution 1 was poured into the container in a dry chamber for electrolytic solution impregnation. The container was sealed, and thereby a laminated cell was produced.

Example 4

A laminated cell-type electric double-layer capacitor was produced as in Example 1 except that an electrolytic solution 8 was used.

(Preparation of electrolytic solution 8)

A solvent for dissolving an electrolyte salt was prepared by mixing acetonitrile and a rectified solution E of

$HCF_2CF_2CH_2OCF_2CFHCF_3$ at a volume ratio of 80/20. To the solvent for dissolving an electrolyte salt was added triethylmethylammonium tetrafluoroborate $(TEMA)BF_4$ to a concentration of 1.2 mol/L. The salt was uniformly dissolved. The resulting non-aqueous electrolytic solution was dried by the same method as in Example 1. The moisture content of the dried non-aqueous electrolytic solution was 20 ppm.

Comparative Example 5

A laminated cell-type electric double-layer capacitor was produced as in Example 3 except that an electrolytic solution 9 was used.

(Preparation of electrolytic solution 9)

A solvent for dissolving an electrolyte salt was prepared by mixing acetonitrile and a fluorine-containing crude ether solution 2 (crude $HCF_2CF_2CH_2OCF_2CFHCF_3$) at a volume ratio of 80/20. To the solvent for dissolving an electrolyte salt was added triethylmethylammonium tetrafluoroborate $(TEMA)BF_4$ to a concentration of 1.2 mol/L. The salt was uniformly dissolved. The resulting non-aqueous electrolytic solution was dried by the same method as in Example 1. The moisture content of the dried non-aqueous electrolytic solution was 20 ppm.

Comparative Example 6

A laminated cell-type electric double-layer capacitor was produced as in Example 1 except that an electrolytic solution 10 was used.

(Preparation of electrolytic solution 10)

A solvent for dissolving an electrolyte salt was prepared by mixing acetonitrile and a rectified solution D of $HCF_2CF_2CH_2OCF_2CFHCF_3$ at a volume ratio of 80/20. To the solvent for dissolving an electrolyte salt was added triethylmethylammonium tetrafluoroborate $(TEMA)BF_4$ to a concentration of 1.2 mol/L. The salt was uniformly dissolved. The resulting non-aqueous electrolytic solution was dried by the same method as in Example 1. The moisture content of the dried non-aqueous electrolytic solution was 20 ppm.

Comparative Example 7

A laminated cell-type electric double-layer capacitor was produced as in Example 1 except that an electrolytic solution 11 was used.

(Preparation of electrolytic solution 11)

A solvent for dissolving an electrolyte salt was prepared by mixing acetonitrile and a rectified solution F of $HCF_2CF_2CH_2OCF_2CFHCF_3$ containing 7,000 ppm of a compound (I-3) at a volume ratio of 80/20. To the solvent for dissolving an electrolyte salt was added triethylmethylammonium tetrafluoroborate $(TEMA)BF_4$ to a concentration of 1.2 mol/L. The salt was uniformly dissolved. The resulting non-aqueous electrolytic solution was dried by the same method as in Example 1. The moisture content of the dried non-aqueous electrolytic solution was 20 ppm.

Comparative Example 8

A laminated cell-type electric double-layer capacitor was produced as in Example 1 except that an electrolytic solution 12 was used.

(Preparation of electrolytic solution 12)

A solvent for dissolving an electrolyte salt was prepared by mixing acetonitrile and a rectified solution C of $HCF_2CF_2CH_2OCF_2CFHCF_3$ containing 7,000 ppm of a compound (II-1) at a volume ratio of 80/20. To the solvent for dissolving an electrolyte salt was added triethylmethylammonium tetrafluoroborate $(TEMA)BF_4$ to a concentration of 1.2 mol/L. The salt was uniformly dissolved. The resulting non-aqueous electrolytic solution was dried by the same method as in Example 1. The moisture content of the dried non-aqueous electrolytic solution was 20 ppm.

(Evaluation of capacitor characteristics)

The obtained electric double-layer capacitors were tested for long-term reliability (capacity retention, internal resistance increase rate, expansion) by the above method. Tables 5 and 6 show the results.

[Table 5]

| | | 0 hour (beginning) | 294 hours | 356 hours | 500 hours |
|---|---|---|---|---|---|
| Example 3 | Capacitance (F) | 3.9 | 3.5 | 3.4 | 3.4 |
| | Capacitance retention (%) | 100 | 91 | 88 | 86 |
| | Internal resistance (mΩ) | 140 | 154 | 168 | 182 |
| | Internal resistance increase rate | 1.0 | 1.1 | 1.2 | 1.3 |
| | Thickness of cell (mm) | 0.58 | 0.5866 | 0.5934 | 0.595 |
| | Expansion (mm) | 0 | 0.0066 | 0.0134 | 0.015 |
| Example 4 | Capacitance (F) | 3.9 | 3.5 | 3.4 | 3.3 |
| | Capacitance retention (%) | 100 | 90 | 86 | 85 |
| | Internal resistance (mΩ) | 140 | 168 | 175 | 182 |
| | Internal resistance increase rate | 1 | 1.2 | 1.25 | 1.3 |
| | Thickness of cell (mm) | 0.58 | 0.5821 | 0.5893 | 0.5994 |
| | Expansion (mm) | 0 | 0.0021 | 0.0093 | 0.0194 |

[Table 6]

| | | 0 hour (beginning) | 294 hours | 356 hours | 500 hours |
|---|---|---|---|---|---|
| Comparative Example 5 | Capacitance (F) | 3.9 | 3.1 | 3.0 | 2.9 |
| | Capacitance retention (%) | 100 | 80 | 77 | 75 |
| | Internal resistance (m) | 140 | 182 | 210 | 224 |
| | Internal resistance increase rate | 1 | 1.3 | 1.5 | 1.6 |
| | Thickness of cell (mm) | 0.58 | 0.6332 | 0.6484 | 0.6547 |
| | Expansion (mm) | 0 | 0.0532 | 0.0684 | 0.0747 |
| Comparative Example 6 | Capacitance (F) | 3.9 | 3.2 | 3.2 | 3.0 |
| | Capacitance retention (%) | 100 | 83 | 82 | 78 |
| | Internal resistance (mΩ) | 140 | 182 | 196 | 210 |
| | Internal resistance increase rate | 1 | 1.3 | 1.4 | 1.5 |
| | Thickness of cell (mm) | 0.58 | 0.6232 | 0.6303 | 0.6387 |
| | Expansion (mm) | 0 | 0.0432 | 0.0503 | 0.0587 |

(continued)

| | | 0 hour (beginning) | 294 hours | 356 hours | 500 hours |
|---|---|---|---|---|---|
| Comparative Example 7 | Capacitance (F) | 3.9 | 3.2 | 3.1 | 3.0 |
| | Capacitance retention (%) | 100 | 82 | 80 | 77 |
| | Internal resistance (mΩ) | 140 | 182 | 196 | 210 |
| | Internal resistance increase rate | 1 | 1.3 | 1.4 | 1.5 |
| | Thickness of cell (mm) | 0.58 | 0.6353 | 0.6452 | 0.6503 |
| | Expansion (mm) | 0 | 0.0553 | 0.0652 | 0.0703 |
| Comparative Example 8 | Capacitance (F) | 3.9 | 3.2 | 3.2 | 3.0 |
| | Capacitance retention (%) | 100 | 83 | 82 | 77 |
| | Internal resistance (mΩ) | 140 | 182 | 196 | 210 |
| | Internal resistance increase rate | 1 | 1.3 | 1.4 | 1.5 |
| | Thickness of cell (mm) | 0.58 | 0.6362 | 0.6434 | 0.6512 |
| | Expansion (mm) | 0 | 0.0562 | 0.0634 | 0.0712 |

## Claims

**1.** An electric double-layer capacitor, comprising:

a positive electrode;
a negative electrode; and
a non-aqueous electrolytic solution that includes a non-aqueous solvent and an electrolyte salt,
the non-aqueous solvent including:

a fluorine-containing ether;
a fluorine-containing unsaturated compound (I); and
a hydroxyl group-containing compound (II),
the fluorine-containing ether being represented by the formula (1):

$$Rf^1\text{-O-}Rf^2 \qquad (1)$$

wherein $Rf^1$ and $Rf^2$ are the same as or different from each other, and are each a C1-C10 alkyl group or a C1-C10 fluoro-alkyl group, provided that at least one of $Rf^1$ and $Rf^2$ is a fluoro-alkyl group,

the hydroxyl group-containing compound (II) being represented by the formula (2):

$$Rf^1OH \qquad (2)$$

wherein $Rf^1$ is as defined above,
the total amount of the compounds (I) and (II) being 5,000 ppm or less based on the amount of the fluorine-containing ether.

**2.** The electric double-layer capacitor according to claim 1,
wherein the fluorine-containing ether represented by the formula (1) is $HCF_2CF_2CH_2OCF_2CF_2H$, the fluorine-containing unsaturated compound (I) includes $CF_2$=$CFCH_2OCF_2CF_2H$ (I-1) and $HCF_2CF$=$CHOCF_2CF_2H$ (I-2), and the hydroxyl group-containing compound (II) is $HCF_2CF_2CH_2OH$ (II-1).

**3.** The electric double-layer capacitor according to claim 1, wherein the fluorine-containing ether represented by the formula (1) is $HCF_2CF_2CH_2OCF_2CFHCF_3$, the fluorine-containing unsaturated compound (I) includes $CF_2=CFCH_2OCF_2CFHCF_3$ (I-3), $HCF_2CF_2CH_2OCF=CFCF_3$ (I-4), $HCF_2CF_2CH_2OCF_2CF=CF_2$ (I-5), and $HCF_2CF=CHOCF_2CFHCF_3$ (I-6), and the hydroxyl group-containing compound (II) is $HCF_2CF_2CH_2OH$ (II-1).

**4.** The electric double-layer capacitor according to any one of claims 1 to 3, wherein the non-aqueous solvent contains the fluorine-containing ether represented by the formula (1) in an amount of 0.01 to 90% by weight.

**5.** A non-aqueous electrolytic solution for an electric double-layer capacitor, comprising:

a non-aqueous solvent; and
an electrolyte salt,
the non-aqueous solvent including:
a fluorine-containing ether;
a fluorine-containing unsaturated compound (I); and
a hydroxyl group-containing compound (II),
the fluorine-containing ether being represented by the formula (1):

$$Rf^1\text{-O-}Rf^2 \qquad (1)$$

wherein $Rf^1$ and $Rf^2$ are the same as or different from each other, and are each a C1-C10 alkyl group or a C1-C10 fluoro-alkyl group, provided that at least one of $Rf^1$ and $Rf^2$ is a fluoro-alkyl group,
the hydroxyl group-containing compound (II) being represented by the formula (2):

$$Rf^1OH \qquad (2)$$

wherein $Rf^1$ is as defined above,
the total amount of the compounds (I) and (II) being 5,000 ppm or less based on the amount of the fluorine-containing ether.

**6.** The non-aqueous electrolytic solution for an electric double-layer capacitor according to claim 5, wherein a moisture content is 20 ppm or less.

## INTERNATIONAL SEARCH REPORT

International application No.
PCT/JP2012/058474

A. CLASSIFICATION OF SUBJECT MATTER
*H01G9/038*(2006.01)i, *C07C31/38*(2006.01)i, *C07C43/17*(2006.01)i

According to International Patent Classification (IPC) or to both national classification and IPC

B. FIELDS SEARCHED

Minimum documentation searched (classification system followed by classification symbols)
H01G9/038, C07C31/38, C07C43/17

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2008/078626 A1 (Daikin Industries, Ltd.), 03 July 2008 (03.07.2008), paragraphs [0020] to [0026], [0034], [0041], [0060], [0095], [0103] & CN 101584075 A & KR 10-2009-0102821 A | 1-5<br>6 |
| Y | JP 2010-135431 A (Daikin Industries, Ltd.), 17 June 2010 (17.06.2010), paragraphs [0011], [0014] (Family: none) | 6 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 June, 2012 (19.06.12) | 26 June, 2012 (26.06.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000208372 A
- JP H08306591 A
- JP 2001143750 A
- JP 3807459 B
- JP 2003132944 A
- JP H08222270 A
- JP 2002100405 A
- JP H0450672 T
- JP H08507407 T
- JP H10294131 A
- JP H1135765 A
- JP H1186630 A
- JP 2006114401 A
- JP H097896 A